Europäisches Patentamt

European Patent Office

Office européen des brevets

(19)

(11) Veröffentlichungsnummer : **0 094 929**
**B1**

(12) # EUROPÄISCHE PATENTSCHRIFT

(45) Veröffentlichungstag der Patentschrift :
26.03.86

(51) Int. Cl.⁴ : **B 21 F 11/00**

(21) Anmeldenummer : 83890076.9

(22) Anmeldetag : 10.05.83

(54) **Verfahren und Schneidvorrichtung zum Unterteilen einer aus Längsdrähten und diese rechtwinkelig kreuzenden Querdrähten bestehenden Gitterbahn in Gittermatten.**

(30) Priorität : 13.05.82 AT 1882/82

(43) Veröffentlichungstag der Anmeldung :
23.11.83 Patentblatt 83/47

(45) Bekanntmachung des Hinweises auf die Patenterteilung : 26.03.86 Patentblatt 86/13

(84) Benannte Vertragsstaaten :
**BE CH DE FR GB IT LI**

(56) Entgegenhaltungen :
**US-A- 4 221 143**

(73) Patentinhaber : **EVG Entwicklungs- u. Verwertungs-Gesellschaft m.b.H.**
**Vinzenz-Muchitsch-Strasse 36**
**A-8011 Graz (AT)**

(72) Erfinder : **Schmidt, Gerhard, Dipl.-Ing.**
**Rosengasse 7**
**A-8042 Graz (AT)**
Erfinder : **Ritter, Klaus, Dipl.-Ing.**
**Peterstalstrasse 157**
**A-8042 Graz (AT)**
Erfinder : **Ritter, Gerhard, Dr., Dipl.-Ing.**
**Unterer Plattenweg 47**
**A-8043 Graz (AT)**

(74) Vertreter : **Holzer, Walter, Dipl.-Ing. et al**
**Patentanwälte Dipl.-Ing. Dr.techn. Schütz Alfred**
**Dr.phil. Mrazek Engelbert Dipl.-Ing. Holzer Walter**
**Dipl.-Ing. Pfeifer Otto Fleischmanngasse 9**
**A-1040 Wien (AT)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Unterteilen einer aus Längsdrähten und diese rechtwinkelig kreuzenden Querdrähten bestehenden Gitterbahn auf einem in Richtung der Längsdrähte verlaufenden Vorschubweg in Gittermatten, deren Längsdrähte bündig mit den vorderen und hinteren Querdrähten der Matten enden, sowie eine Schneidvorrichtung zur Durchführung des Verfahrens.

Bei der Herstellung geschweißter Gitter mittels Schweißmaschinen, die von Drahtringen mit Längsdrahtmaterial versorgt werden und Gitterbahnen großer Länge liefern, wird häufig gefordert, einzelne Gitterbahnabschnitte, sogenannte Gittermatten, derart von der Gitterbahn abzutrennen, daß keine Längsdrahtendabschnitte über die die abgelängten Gittermatten an ihren vorderen und hinteren Enden begrenzenden Querdrähte überstehen.

Um bei einer solchen Unterteilung der Gitterbahn möglichst wenig Abfall zu erhalten, empfiehlt es sich, bei der Herstellung der Gitterbahn jeweils in Abständen, die der gewünschten Länge der Gittermatten entsprechen, zwei Querdrähte in einem gegenseitigen Abstand anzuordnen, der wesentlich kleiner als der gegenseitige Abstand der übrigen Querdrähte der Gitterbahn ist. Zwischen diesen engstehenden Querdrähten kann sodann die Unterteilung der Gitterbahn mit geringem Abfall erfolgen, indem die kurzen Längsdrahtstücke, die zwischen diesen Querdrähten liegen, durch zwei Schnitte neben den Querdrähten durchtrennt werden.

Die Erfindung befaßt sich mit der Aufgabe, eine Verfahrensweise und eine Schneidvorrichtung zu schaffen, welche die geschilderte Art der Unterteilung einer Gitterbahn auf ihrem Vorschubweg in einem einzigen Arbeitsgang ermöglicht.

Gelöst wird diese Aufgabe erfindungsgemäß durch die Verwendung einer Schneidvorrichtung mit einem sich auf einer Seite des Vorschubweges der Gitterbahn quer zu diesem erstreckenden Messerbalken, der in zwei zueinander parallelen und zum Vorschubweg der Gitterbahn normalen Querebenen, deren gegenseitiger Abstand dem Querdrahtabstand an der gewünschten Unterteilungsstelle der Gitterbahn entspricht, Schneidkanten trägt und zumindest einen im wesentlichen keilförmig vorspringenden, für den Eintritt in eine Masche der Gitterbahn geeigneten Führungsansatz aufweist, und mit zwei auf der anderen Seite des Vorschubweges der Gitterbahn, dem Messerbalken gegenüber angeordneten balkenartigen Gegenhaltern, die voneinander einen den Eintritt des Führungsansatzes und der Schneidkanten des Messerbalkens bei dessen Arbeitsbewegung ermöglichenden Abstand haben.

Wie später noch genauer erläutert wird, kann das Verfahren so durchgeführt werden, daß die Gegenhalter unmittelbar die beiden Querdrähte an der Schnittstelle abstützen und der Messerbalken die mittelbar von diesen Querdrähten abgestützten Längsdrahtabschnitte ausstanzt, oder auch so, daß die Gegenhalter unmittelbar die Längsdrähte abstützen, wobei eine Schneidvorrichtung verwendet wird, bei welcher die einander zugekehrten Kanten der Gegenhalter vorteilhaft ebenfalls als Schneidkanten ausgebildet sind und scherenartig mit den Schneidkanten am Messerbalken zusammenwirken.

Insbesondere kann bei der verwendeten Schneidvorrichtung der Messerbalken zwei Messerblätter oder zwei Reihen von Messerblättern aufweisen, deren gegenseitiger Abstand, vorzugsweise durch Zwischenlage von Distanzstücken, veränderbar ist, wobei auch der gegenseitige Abstand der beiden Gegenhalter veränderbar ist, so daß der gegenseitige Abstand der Messerkanten entsprechend dem gewählten Querdrahtabstand an der Unterteilungsstelle der Gitterbahn eingestellt werden kann.

Eine zur Durchführung des erfindungsgemäßen Verfahrens geeignete und auf verschiedene Querdrahtabstände an der Unterteilungsstelle der Gitterbahn einstellbare Schneidvorrichtung nach der Erfindung ist zusammenfassend gekennzeichnet durch einen sich auf einer Seite des Vorschubweges der Gitterbahn quer zu diesem erstreckenden Messerbalken, der in zwei zueinander parallelen und zum Vorschubweg der Gitterbahn normalen Querebenen, deren gegenseitiger Abstand veränderbar ist, Schneidkanten trägt und zumindest einen im wesentlichen keilförmig vorspringenden, für den Eintritt in eine Masche der Gitterbahn geeigneten Führungsansatz aufweist, und durch zwei auf der anderen Seite des Vorschubweges der Gitterbahn, dem Messerbalken gegenüber angeordnete balkenartige Gegenhalter, die voneinander einen den Eintritt des Führungsansatzes und der Schneidkanten des Messerbalkens bei dessen Arbeitsbewegung ermöglichenden Abstand haben, wobei die Schneidkanten am Messerbalken und/oder die Schneidkanten an den Gegenhaltern vorzugsweise schräg zur Gitterbahnebene verlaufen.

Es sei erwähnt, daß zum Unterteilen von Gitterrostbahnen, die aus hochkantstehenden Längselementen und Querdrähten bestehen, sogenannte Kammscheren bekannt sind (vgl. z. B. US-A-4 221 143), die zwei auf der gleichen Seite der Gitterrostbahn angeordnete gezahnte Scherblätter aufweisen, welche so gegen den Gitterrost angestellt werden, daß die hochkantstehenden Längselemente in koinzidierende Zahnlücken der Scherblätter eingreifen; hernach werden die Scherblätter in Richtung der Gitterrostebene relativ zueinander bewegt, so daß sie die hochkantstehenden Längselemente mit Schnittrichtung in deren Dickenrichtung durchtrennen. Mit einer solchen Schneidvorrichtung kann aber jeweils nur ein einziger Schnitt in Querrichtung des Gitters bzw. Gitterrostes durchgeführt werden, so daß ein Längsdrahtüberstände an der Unterteilungsstelle einer Gitterbahn vermeidender zweifacher Schnitt in einem Arbeitsgang, wie es der Zielsetzung der Erfindung entspricht, nicht möglich ist.

Weitere Merkmale und Vorteile der Erfindung ergeben sich aus der nachfolgenden Beschreibung von Ausführungsbeispielen anhand der Zeichnungen. Es zeigt:

Figur 1 eine erfindungsgemäße Schneidvorrichtung in teilweise geschnittener Seitenansicht;

Figur 2 ein Messer der Schneidvorrichtung in axonometrischer Darstellung;

Figur 3 die Anordnung der Messerblätter auf dem sie tragenden Messerbalken;

Figur 4 in größerem Maßstab die gleiche Relativlage des Messerbalkens und der Gegenhalter bezüglich der Gitterbahn wie in Figur 1 und

Figur 5 die umgekehrte Relativlage dieser Teile.

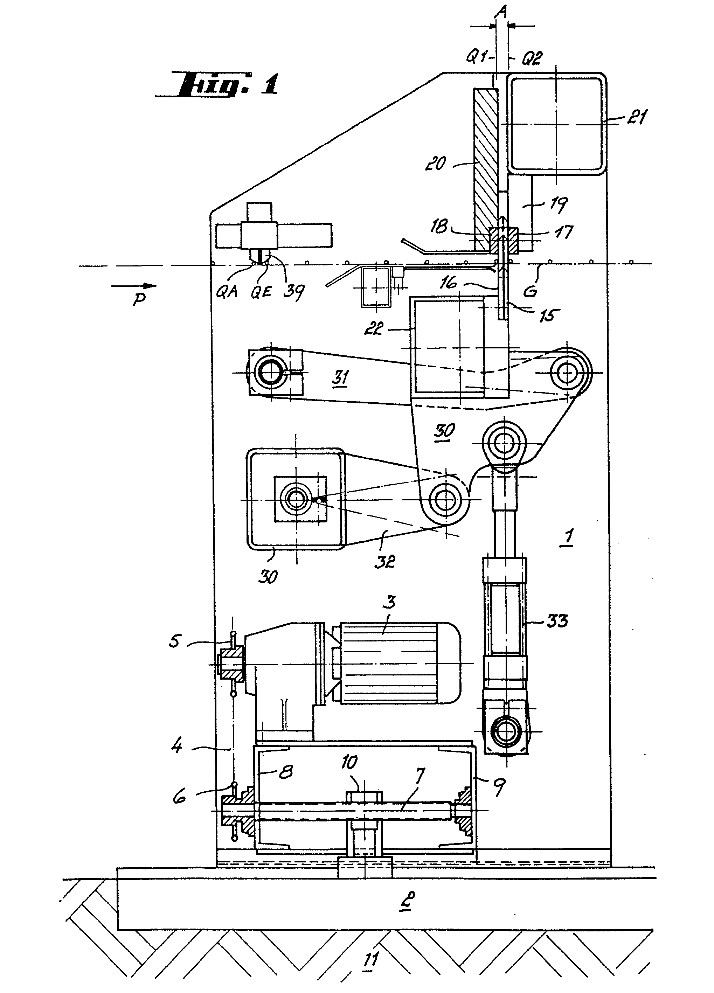

In Figur 1 erkennt man ein Maschinengestell 1, das auf Schienen 2 in der durch einen Pfeil P angedeuteten Vorschubrichtung der Gitterbahn verschiebbar geführt ist.

Ein Elektromotor 3 treibt mittels einer Kette 4 und Kettenrädern 5, 6 eine Gewindespindel 7 an. Die Gewindespindel 7 ist in Trägern 8, 9 gelagert, die ihrerseits starr mit dem Maschinengestell 1 verbunden sind. Die Gewindespindel durchsetzt eine Mutter 10, die zwischen den Schienen 2 fest am Fundament 11 montiert ist und deren Innengewinde mit dem Außengewinde der Spindel 7 in Eingriff steht. Durch Einschaltung des Elektromotors 3 kann somit das Maschinengestell 1 längs der Schienen 2 in Vorschubrichtung P der allgemein mit G bezeichneten, aus einander kreuzenden und an den Kreuzungspunkten miteinander verschweißten Längsdrähten LD und Querdrähten QD bestehenden Gitterbahn verschoben werden.

Die Schneidvorrichtung selbst besteht aus Messerblättern 15, 16 und balkenartigen Gegenhaltern 17, 18. Die Gegenhalter 17, 18 sind mittels Tragprofilen 19, 20 in veränderbarem gegenseitigen Abstand an einem Kastenträger 21 befestigt. Der Kastenträger 21 erstreckt sich quer über die gesamte Breite des Maschinengestells 1. Ebenso sind die Messerblätter 15, 16 an einem sich quer über das Maschinengestell 1 erstreckenden Kastenträger 22 befestigt und ihr gegenseitiger Abstand ist gleichfalls veränderbar.

Der Kastenträger 22 mit den beiden Messerblättern 15, 16 stellt einen auf später beschriebene Weise bewegbar gelagerten Messerbalken dar, der in zwei zueinander parallelen und zum Vorschubweg der Gitterbahn normalen Querebenen Q1 und Q2 Schneidkanten 15a, 16a bildet. Der gegenseitige Abstand A der Querebenen Q1, Q2 und damit der Schneidkanten 15a, 16a entspricht dem Abstand der Querdrähte an der gewünschten Unterteilungsstelle der Gitterbahn. Ist dieser Abstand vorgegeben und konstant, so kann der Messerbalken einstückig ausgebildet sein. Im allgemeinen wird aber eine Möglichkeit zur Änderung dieses Abstandes gefordert, wobei dann getrennte Messerblätter 15, 16 vorgesehen werden. Um die Messerblätter 15, 16 verläßlich in einem gewünschten gegenseitigen Abstand fixieren zu können, wird zwischen ihnen ein auswechselbares Distanzstück 23 eingefügt.

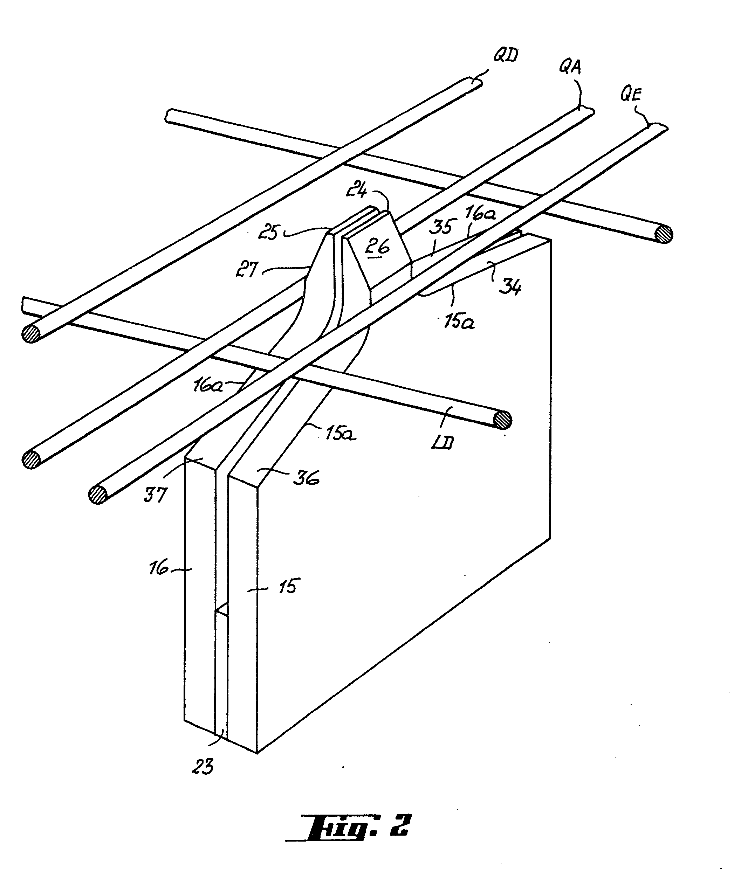

Wie insbesondere aus den Figuren 1 und 2 erkennbar ist, werden die Messerblätter 15, 16 in solchem gegenseitigen Abstand angeordnet, daß ihre Schneidkanten 15a, 16a genau in den Zwischenraum zwischen zwei in geringem gegenseitigen Abstand angeordneten Querdrähten QA und QE der Gitterbahn G passen, wobei QE der Endquerdraht der jeweils abzutrennenden Gittermatte ist und QA der Anfangsquerdraht der nächsten Gittermatte wird.

Um die Messerblätter präzise zwischen die beiden Querdrähte QA und QE einführen zu können, weisen sie vorstehende Zungen 24, 25 mit schräg nach unten verlaufenden Keilflächen 26, 27 auf, die einen für den Eintritt in eine Masche der Gitterbahn geeigneten Führungsansatz bilden.

Der Kastenträger 22 ist an seinen beiden Enden je an einer Tragplatte 30 befestigt, wobei jede Tragplatte 30 schwenkbar an zwei eine Geradführung bildenden, im Maschinengehäuse 1 schwenkbar gelagerten einarmigen Hebeln 31, 32 angelenkt ist. Mit jeder Tragplatte 30 ist die Kolbenstange eines hydraulischen Arbeitszylinders 33 gelenkig verbunden, so daß die Tragplatten 30, der Kastenträger 22 und mit diesem die Messerblätter 15, 16 zum Schneiden auf- und abbewegt werden können.

Um die Schnittkräfte in mäßigen Grenzen zu halten, können die Gegenhalter 17, 18 und/oder die Schneidkanten in einem spitzen Winkel zur Ebene der Gitterbahn G angeordnet sein.

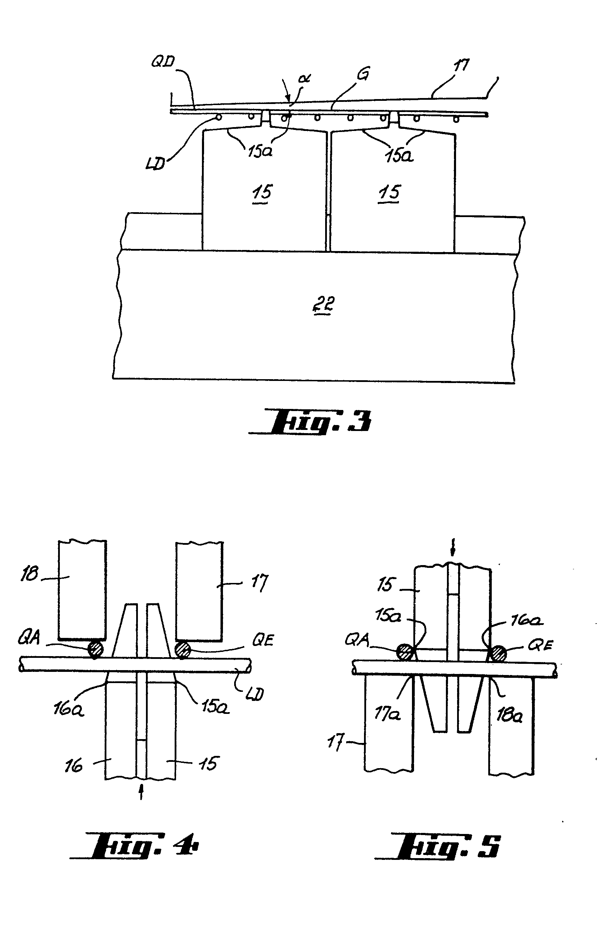

Beim Ausführungsbeispiel nach den Figuren 2 und 3 trägt der Messerbalken zwei Reihen von Messerblättern 15, 16, die je in der Mitte die schon erwähnten Führungsansätze 24, 25 und beiderseits derselben gegensinnig schräg verlaufende Messerkanten 15a, 16a aufweisen, so daß, wie insbesondere aus der Nebeneinanderreihung der Messerblätter in Figur 3 hervorgeht, nicht alle vom gleichen Messerblatt erfaßten Längsdrähte jeweils gleichzeitig durchtrennt werden.

Bei einer Aufwärtsbewegung der Messerblätter 15, 16 nach Figur 2 unter der Wirkung der Arbeitszylinder 33 treffen dann, wenn die Gegenhalter 17, 18 unter einem spitzen Winkel α zur Ebene der Gitterbahn G angeordnet sind, zunächst die Stirnflächen 34, 35, 36 und 37 des dem einen Seitenrand der Gitterbahn G benachbarten Messerblattpaares 15, 16 auf Längsdrähte LD der Gitterbahn und heben die Gitterbahn soweit an, daß die Querdrähte QA und QE zur Anlage an die schrägen Gegenhalter 17, 18 gelangen. Da die Gitterbahn nun nicht mehr weiter nach oben ausweichen kann, stanzen die Schneidkanten 15a, 16a der Messerblätter die zwischen den Querdrähten QA und QE liegenden Längsdrahtstücke heraus, während sich der Messerbalken weiter nach oben bewegt. Dieser Vorgang wiederholt sich nun, von jenem Seitenrand der Gitterbahn G beginnend, an welchem die Querdrähte zuerst zur Anlage an die schrägen Gegenhalter gelangen, und zum gegenüberliegenden Seitenrand der Gitterbahn hin fortschreitend, wobei sämtliche Längsdrähte der Gitterbahn nacheinander durchtrennt werden.

In demselben Maße, wie sich bei diesem Vorgang die Schnittkräfte von einem Rand der Maschine zum anderen hin verlagern, verlagern sich auch die auf die beiden Tragplatten 30 aufzubringenden Kräfte. Um daher eine gleichmäßige Beteiligung beider Arbeitszylinder 33 am Schneidvorgang sicherzustellen, sind die einarmigen Hebel 32 an den gegenüberliegenden Enden eines gemeinsamen, torsionssteifen, an seinen beiden Enden im Maschinengestell 1 um seine Längsachse drehbar gelagerten Kastenträgers 38 angeschlossen.

Da die genaue Länge der Gitterbahn und damit auch der Abstand der Schnittlinie der Schneidvorrichtung von der Schweißlinie der Gitterschweißmaschine von der Erwärmung des Gitters beim Schweißvorgang beeinflußt wird, ist in einem der Länge weniger Vorschubschritte entsprechenden Abstand vor der Schnittlinie der Schneidvorrichtung ein mechanischer, optischer oder magnetischer Fühler 39 vorgesehen. Dieser Fühler steht über einen Servomechanismus bekannter Bauweise mit dem Elektromotor 3 in Verbindung und bewirkt mit Hilfe dieses Motors eine Verschiebung der Schneidvorrichtung in eine solche Lage, daß die Messerblätter 15, 16 beim Schneidvorgang genau in die Lücke zwischen den Querdrähten QA und QE eintreten können.

In Figur 4 ist nochmals die Relativlage der Messerblätter 15, 16 des Messerbalkens und der Gegenhalter 17, 18 bezüglich der Querdrähte QA und QE an der Unterteilungsstelle der Gitterbahn entsprechend der Anordnung nach Figur 1 dargestellt. Man erkennt, daß bei dieser Relativlage die Gegenhalter 17, 18 nur zur unmittelbaren Abstützung der Querdrähte QA und QE dienen, am Schneidvorgang selbst aber nicht beteiligt sind. Bei der durch einen Pfeil angedeuteten Arbeitsbewegung der Messerblätter 15, 16 werden die zwischen den beiden Querdrähten liegenden Längsdrahtstücke zunächst satt gegen die Querdrähte gebogen und dann ausgestanzt, wodurch sich eine vorteilhafte Abrundung der Längsdrahtenden an der Schnittstelle ergibt.

Wie Figur 5 zeigt, kann aber auch die umgekehrte Relativlage der Messerblätter 15, 16 und Gegenhalter 17, 18 bezüglich der Gitterdrähte QA, QE und LD angewendet werden, wobei dann die einander zugekehrten Kanten der Gegenhalter 17, 18 vorteilhaft als Schneidkanten 17a, 18a ausgebildet werden und scherenartig mit den Schneidkanten 15a, 15b bei der wieder durch einen Pfeil angedeuteten Schneidbewegung der Messerblätter 15, 16 zusammenwirken. Diese Scherenbauweise empfiehlt sich insbesondere für Gitterbahnen mit größeren Längsdrahtdurchmessern.

Die beschriebenen Ausführungsbeispiele können natürlich im Rahmen der Erfindung, insbesondere hinsichtlich des Antriebes der Messerbalken und der Ausbildung und Anordnung der Messerblätter, mannigfaltig abgewandelt werden.

## Patentansprüche

1. Verfahren zum Unterteilen einer aus Längsdrähten und diese rechtwinkelig kreuzenden Querdrähten bestehenden Gitterbahn (G) auf einem in Richtung der Längsdrähte verlaufenden Vorschubweg in Gittermatten, deren Längsdrähte bündig mit den vorderen und hinteren Querdrähten der Matten enden, gekennzeichnet durch die Verwendung einer Schneidvorrichtung mit einem sich auf einer Seite des Vorschubweges der Gitterbahn (G) quer zu diesem erstreckenden Messerbalken (15, 16, 23), der in zwei zueinander parallelen und zum Vorschubweg der Gitterbahn normalen Querebenen (Q1, Q2), deren gegenseitiger Abstand (A) dem Querdrahtabstand an der gewünschten Unterteilungsstelle der Gitterbahn entspricht, Schneidkanten (15a, 16a) trägt und zumindest einen im wesentlichen keilförmig vorspringenden, für den Eintritt in eine Masche der Gitterbahn geeigneten Führungsansatz (24, 25) aufweist, und mit zwei auf der anderen Seite des Vorschubweges der Gitterbahn, dem Messerbalken gegenüber angeordneten balkenartigen Gegenhaltern (17, 18), die voneinander einen den Eintritt des Führungsansatzes (24, 25) und der Schneidkanten (15a, 16a) des Messerbalkens (15, 16, 23) bei dessen Arbeitsbewegung ermöglichenden Abstand haben.

2. Verfahren nach Patentanspruch 1 unter Verwendung einer Schneidvorrichtung, bei welcher die einander zugekehrten Kanten der beiden Gegenhalter (17, 18) ebenfalls als Schneidkanten (17a, 18a) ausgebildet sind und scherenartig mit den Schneidkanten (15a, 15b) am Messerbalken (15, 16, 23) zusammenwirken.

3. Verfahren nach Patentanspruch 1 oder 2 unter Verwendung einer Schneidvorrichtung, bei welcher der Messerbalken (15, 16, 23) zwei Messerblätter (15, 16) oder zwei Reihen von Messerblättern aufweist, deren gegenseitiger Abstand, vorzugsweise durch Zwischenlage von Distanzstücken (23), veränderbar ist, und bei welcher auch der gegenseitige Abstand der beiden Gegenhalter (17, 18) veränderbar ist.

4. Schneidvorrichtung zur Durchführung des Verfahrens nach einem der Patentansprüche 1 bis 3, gekennzeichnet durch einen sich auf einer Seite des Vorschubweges der Gitterbahn (G) quer zu diesem erstreckenden Messerbalken (15, 16, 23), der in zwei zueinander parallelen und zum Vorschubweg der Gitterbahn normalen Querebenen (Q1, Q2), deren gegenseitiger Abstand (A) veränderbar ist, Schneidkanten (15a, 16a) trägt und zumindest einen im wesentlichen keilförmig vorspringenden, für den Eintritt in eine Masche der Gitterbahn geeigneten Führungsansatz (24, 25) aufweist, und durch zwei auf der anderen Seite des Vorschubweges der Gitterbahn, dem Messerbalken gegenüber angeordnete balkenartige Gegenhalter (17, 18), die voneinander einen den Eintritt des Führungsansatzes (24, 25) und der Schneidkanten (15a, 16a) des Messerbalkens (15, 16, 23) bei dessen Arbeitsbewegung ermöglichenden Abstand haben, wobei die Schneidkanten (15a, 16a) am Messerbalken (15, 16, 23) und/oder die Schneidkanten (17a, 18a) an den Gegenhaltern (17, 18) vorzugsweise schräg zur Gitterbahnebene verlaufen.

5. Schneidvorrichtung nach Patentanspruch 4, dadurch gekennzeichnet, daß der Messerbalken (15, 16, 23) zwei Reihen von Messerblättern (15, 16) trägt, die je in der Mitte einen Führungsansatz (24, 25) und beiderseits desselben gegensinnig schräg verlaufende Messerkanten (15a, 16a) aufweisen.

6. Schneidvorrichtung nach Patentanspruch 4 oder 5, gekennzeichnet durch ein in Vorschubrichtung der Längsdrähte (LD) verschiebbares Maschinengestell (1) und einen von einem Fühler (39) im Vorschubweg der Gitterbahn (G) gesteuerten Servomechanismus (3-10, 39) zur automatischen Einstellung der Schnitteebenen (Q1, Q2) des Messerbalkens (15, 16, 23) auf eine Querdrahtlücke durch Verschiebung des Maschinengestells (1).


## Claims

1. Method of subdividing a trellis web consisting of longitudinal wires and rectangularly traversing cross wires along a path of advance extending in the direction of the longitudinal wires into trellis mats, the longitudinal wires of which end flush with the front and rear transverse wires of the mats, characterized by the use of a cutting device having a cutter bar (15, 16, 23) extending on one side of the path of advance of the trellis web (G) and transverse thereto, said cutter bar carrying cutting edges (15a, 16a) in two parallel transverse planes (Q1, Q2) perpendicular to the path of advance of the trellis web and spaced by a distance (A) corresponding to the distance of the transverse wires at the desired point of subdivision of the trellis web, and comprising at least one substantially wedge-like projecting guide lug (24, 25) adapted to enter into a mesh of the trellis web, and further having two bar-like abutments (17, 18) positioned on the other side of the path of advance of the trellis web opposite to the cutter bar, which abutments have a spacing enabling therebetween the entrance of the guide lug (24, 25) and of the cutting edges (15a, 16a) of the cutter bar (15, 16, 23) in the course of the operating movement of the latter.

2. Method according to claim 1, using a cutting device in which the facing edges of the two abutments (17, 18) are also formed as cutting edges (17a, 18a) and cooperate in a scissor-like manner with the cutting edges (15a, 15b) on the cutter bar (15, 16, 23).

3. Method according to claim 1 or 2, using a cutting device in which the cutter bar (15, 16, 23) comprises two cutter blades (15, 16) or two rows of cutter blades, the spacing of which is variable, preferably by insertion of spacers (23), and in which also the spacing of the two abutments (17, 18) is variable.

4. Cutting device for carrying out the method according to one of the claims 1 to 3, characterized by a cutter bar (15, 16, 23) extending on one side of the path of advance of the trellis web (G) and transverse thereto, said cutter bar carrying at a variable distance cutting edges (15a, 16a) in two parallel transverse planes (Q1, Q2) perpendicular to the path of advance of the trellis web and comprising at least one substantially wedge-like projecting guide lug (24, 25) adapted to enter into a mesh of the trellis web, and by two bar-like abutments (17, 18) positioned on the other side of the path of advance of the trellis web opposite to the cutter bar, which abutments have a spacing enabling therebetween the entrance of the guide lug (24, 25) and of the cutting edges (15a, 16a) of the cutter bar (15, 16, 23) in the course of the operating movement of the latter, the cutting edges (15a, 16a) on the cutter bar (15, 16, 23) and/or the cutting edges (17a, 18a) on the abutments (17, 18) extending preferably inclined to the plane of the trellis web.

5. Cutting device according to claim 4, characterized in that the cutter bar (15, 16, 23) carries two rows of cutter blades (15, 16) each comprising a guide lug (24, 25) in the middle and oppositely inclined cutter edges (15a, 16a) on both sides thereof.

6. Cutting device according to claim 4 or 5, characterized by a machine frame (1) shiftable in the direction of advance of said longitudinal wires (LD) and a servo mechanism (3-10, 39) controlled by a sensor (39) in the path of advance of the trellis web (G) for the automatic adjustment of the cutting planes (Q1, Q2) of the cutter bar (15, 16, 23) to one transverse wire mesh by shifting the machine frame (1).


## Revendications

1. Procédé pour subdiviser une nappe de treillis (G) composée de fils longitudinaux et de fils transversaux qui croisent les fils longitudinaux à angle droit sur un trajet d'avancement s'étendant dans le sens des fils longitudinaux, en des pièces de treillis dont les fils longitudinaux se terminent au ras des fils transversaux antérieur et postérieur des pièces de treillis, caractérisé en ce qu'on utilise un dispositif sectionneur comportant une barre porte-couteaux (15, 16, 23) qui s'étend d'un côté du trajet d'avancement de la nappe de treillis (G), transversalement à celle-ci, et qui, dans deux plans transversaux (Q1, Q2) parallèles l'un à l'autre et perpendiculaires au trajet d'avancement de la nappe de treillis, dont l'écartement (A) correspond à l'espacement des fils transversaux au niveau de l'endroit de subdivision souhaité de la nappe de treillis, porte des arêtes de coupe (15a, 16a) et présente au moins une saillie de guidage adéquate (24, 25) essentiellement cunéiforme, propre à pénétrer dans une maille de la nappe de treillis, et deux contre-couteaux (17, 18) en forme de barres de l'autre côté du trajet d'avancement de la nappe de treillis qui sont opposés à la barre porte-couteaux et qui sont espacés l'un de l'autre d'une distance permettant l'entrée de la saillie de guidage (24, 25) et des arêtes de coupe (15a, 16a) de la barre porte-couteaux (15, 16, 23) lors de leur déplacement de travail.

2. Procédé suivant la revendication 1 utilisant un dispositif sectionneur tel que les arêtes tournées l'une vers l'autre des deux contre-couteaux (17, 18) ont également la forme d'arêtes de coupe (17a, 18a) et coopèrent en cisaillement avec les arêtes de coupe (15a, 15b) prévues sur la barre porte-couteaux (15, 16, 23).

3. Procédé suivant la revendication 1 ou 2, utilisant un dispositif sectionneur tel que la barre porte-couteaux (15, 16, 23) comporte deux lames de couteaux (15, 16) ou deux rangées de lames de couteaux dont l'écartement peut être modifié de préférence par intercalation de pièces d'espacement (23) et tel que l'écartement des deux contre-couteaux (17, 18) peut aussi être modifié.

4. Dispositif sectionneur pour exécuter le procédé suivant l'une quelconque des revendications 1 à 3, caractérisé par une barre porte-couteaux (15, 16, 23) qui s'étend d'un côté du trajet d'avancement de la nappe de treillis (G) perpendiculairement à celui-ci et qui, dans deux plans transversaux (Q1, Q2) parallèles l'un à l'autre et perpendiculaires au trajet d'avancement de la nappe de treillis, dont l'écartement (A) peut être modifié, porte des arêtes de coupe (15a, 16a) et présente au moins une saillie de guidage (24, 25) essentiellement cunéiforme, propre à pénétrer dans une maille de la nappe de treillis, et par deux contre-couteaux en forme de barres (17, 18) de l'autre côté du trajet d'avancement de la nappe de treillis, qui sont opposés à la barre porte-couteaux et qui sont espacés l'un de l'autre d'une distance permettant l'entrée de la saillie de guidage (24, 25) et des arêtes de coupe (15a, 16a) de la barre porte-couteaux (15, 16, 23) lors de leur déplacement de travail, étant entendu que les arêtes de coupe (15a, 16a) prévues sur la barre porte-couteaux (15, 16, 23) et/ou les arêtes de ccupe (17a, 18a) prévues sur les contre-couteaux (17, 18) s'étendent de préférence obliquement au plan du treillis.

5. Dispositif sectionneur suivant la revendication 4, caractérisé en ce que la barre porte-couteaux (15, 16, 23) porte deux rangées de lames de couteaux (15, 16) qui présentent chacune en leur milieu une saillie de guidage (24, 25) et, de chaque côté de celle-ci, des arêtes de coupe (15a, 16a) qui s'étendent obliquement en sens opposés.

6. Dispositif sectionneur suivant la revendication 4 ou 5, caractérisé par un bâti de machine (1) pouvant se déplacer dans le sens d'avancement des fils longitudinaux (LD) et par un servomécanisme (3-10, 39) commandé par un palpeur (39) dans le trajet d'avancement de la nappe de treillis (G) pour régler automatiquement les plans de sectionnement (Q1, Q2) de la barre porte-couteaux (15, 16, 23) sur un espace entre des filtres transversaux par déplacement du bâti de machine (1).

Fig. 1

QD  QA  QE

24

25

26

35  16a

27  34

15a

16a

15a  LD

37  36

16  15

23

**Fig. 2**

QD α G 17

LD 15a 15a

15 15

22

**Fig. 3**

18 17

QA QE

16a 15a LD

16 15

**Fig. 4**

15

15a 16a

QA QE

17a 18a

17

**Fig. 5**